Europäisches Patentamt

European Patent Office

Office européen des brevets

(19)

(11) Publication number: **0 065 380**

**B1**

(12) **EUROPEAN PATENT SPECIFICATION** ·

(45) Date of publication of patent specification: **19.03.86**

(51) Int. Cl.⁴: **B 65 B 55/08**

(21) Application number: **82302281.9**

(22) Date of filing: **05.05.82**

(54) **Ultraviolet sterilization system.**

(30) Priority: **11.05.81 CA 377325**

(43) Date of publication of application:
**24.11.82 Bulletin 82/47**

(45) Publication of the grant of the patent:
**19.03.86 Bulletin 86/12**

(84) Designated Contracting States:
**CH DE FR GB LI NL** ·

(56) References cited:
**CH-A-572 415**
**CH-A-578 457**
**US-A-2 401 131**
**US-A-3 790 801**

(73) Proprietor: **CONSUMERS GLASS COMPANY LIMITED**
**401 The West Mall, Suite 900**
**Etobicoke Ontario M9C 5J7 (CA)**

(72) Inventor: **Haluk, Michael Ivan**
**108 Durie Street**
**Toronto Ontario M6S 3G1 (CA)**
Inventor: **Mancini, Derek Vincent**
**70 Main Street South**
**Markham Ontario (CA)**

(74) Representative: **Fisher, Bernard et al**
**Raworth, Moss & Cook 36 Sydenham Road**
**Croydon Surrey CR0 2EF (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to automated packaging of spoilable products into preformed packaging materials where the packaging materials are exposed to ultraviolet radiation prior to the loading of the product. More particularly the invention relates to a low intensity ultraviolet radiation source for use in a multi-lane condiment packing machine for treating of the material prior to loading of the product thereby substantially reducing the likelihood of the packaging material contaminating and spoiling the loaded product.

Ultraviolet radiation has long been recognized as useful for killing various types of micro-organisms and particularly bacteria. It has been used in rooms for providing a more sterile atmosphere to increase the useful life of a spoilable product and has been used in hospitals to prevent or minimize the transfer of micro-organisms through the air.

One apparatus for ultraviolet treatment of products is disclosed in United States Patent 3,790,801 which issued to Coleman, February 5, 1974 and utilizes water cooled ultraviolet lamps in combination with reflectors for irradiating ultraviolet radiation downwardly on to a sheet of material. Various cooling means are provided with this structure for maintaining the temperature of the material within a desirable range and the maximum temperature of the lamps is controlled due to the water circulation source. Although this is satisfactory for a separately standing ultraviolet radiation apparatus it is not directly applicable to the radiation of preformed packaging material commonly used in multi-lane condiment filling machines. These packaging materials include previously thermal formed containers and separate thermal reactive lids of a series of interconnected lids. For maximum efficiency these packaging materials should be exposed to the ultraviolet radiation immediately prior to filling of product into the containers and sealing of a lid to a filled container. Due to space limitations, it is desirable to incorporate the ultraviolet treatment with the various other function of a packaging machine, however to date this has not been accomplished in an entirely satisfactory manner.

Canadian Patent 1,067,751 which issued to Aluminumwerke AG Rorschach and B.B.C. Brown, Boveri and Company Limited, Switzerland, December 11, 1979 discloses a method and apparatus for aseptic filling and packaging of food stuffs wherein the actual sterilization of preformed containers and lidding material is completed in conjunction with the filling operation. This patent discloses the features defined in the precharacterising portions of claims 1 and 4. According to the teaching of this patent a high intensity ultraviolet radiation source having a current density within the mercury discharge tube of at least 1 amp per centimeter squared can be used in a prescribed manner with various structural limitatations for providing ultraviolet radiation for sterilization of the packaging material.

This is accomplished due to the particular structure of the ultraviolet radiation housing and a homogenous ultraviolet radiation is achieved which allows preformed containers to be sterilized. Although this system is satisfactory for the treatment of packaging materials it has various drawbacks including high temperature characteristics not compatible with all packaging materials. These higher temperatures cause the distance between the radiation source and the packaging material to be increased to minimize the possibility of damage due to the heat of the radiation source. Furthermore, high intensity radiation tubes have fairly long warm-up times and cool-out periods which cause difficulty with respect to the operation of multi-lane condiment filling machines. These machines are often subject to minor interruptions in their operation and these interruptions will expose the packaging material to excess energy and heat damage of the packaging material. Furthermore, due to the nature of the high intensity ultraviolet radiation lamps, water cooling of the tubes is often necessary, further complicating the design of the filling machine.

Although the sterilisation of packaging materials through the use of ultraviolet radiation is known in the art, there exists a requirement to provide a system which is fully compatible with packaging materials which are temperature sensitive while providing sufficient ultraviolet radiation to sterilize preformed packaging material in conjunction with existing operating characteristics of known multi-lane condiment filling machines.

According to one aspect of the invention there is provided a method for packaging products into preformed containers and sealing each container with a lid comprising loading containers onto a conveyor, advancing the containers, filling the containers, heat-sealing a lid to each filled container and unloading the containers from the conveyor wherein the packaging material forming the containers and lids is exposed, prior to dispensing and sealing of the products, to ultraviolet radiation wherein the packaging material is exposed to the ultraviolet radiation for sufficient time to reduce bacteria on such packaging material to a point that no longer critically affects the shelf life of the packaged product, characterised by generating said ultraviolet radiation within approximately 2.5 cm (1 inch) of said packaging material which is substantially free of ultraviolet radiation having a wavelength less than $200 \times 10^{-9}$m.

According to another aspect of the invention there is provided a high speed multi-lane condiment or dairy filling machine for packaging aseptic product in packaging material including a conveyor for receiving containers and spacing such containers across the width and along the length thereof, means for advancing such containers, filling means for loading aseptic product into such containers, means for positioning and heat sealing a lid to a filled container, a plurality of ultraviolet radiation lamps for exposing said packaging material in the form of containers and lids prior to filling and sealing said packaging material to ultraviolet radiation for sufficient time to reduce bacteria on such packaging material to a point that no longer critically affects shelf life of the packaged product characterised by said plurality of lamps being positioned within approximately 2.5 cm (1 inch) of said packaging material, said plurality of lamps emitting ultraviolet radiation which is substantially free of ultraviolet radiation having a wavelength less than $200 \times 10^{-9}$m.

Preferably, the ultraviolet radiation lamps have an operating temperature less than 65°C., and are positioned within three centimeters of the conveyor bed. The ultraviolet radiation is primarily of a wavelength greater than $200 \times 10^{-9}$m (2000 Angstroms), and should include two percent or less of radiation having a wavelength which generates ozone. Preferably, the packaging material is exposed so as to receive at least one joule of energy produced at a wavelength of $253.7 \times 10^{-9}$m (2537 Angstroms).

In one embodiment, a housing is provided for receiving the ultraviolet lamps which is pivotally supported above the conveyor with the lower portion of the housing being substantially planar and including a window for exposing such containers to the ultraviolet radiation. The window is transparent to ultraviolet radiation of a wavelength greater than $200 \times 10^{-9}$m (2000 Angstroms) and the pivoted housing in the operating position is provided with a clearance between the conveyor and the lower portion of the housing of less than 12.5 mm (one-half inch). The clearance between the window and the lower edge of the ultraviolet lamps is approximately 6.3 mm (one-quarter inch).

The conveyor may be supported between two continuous rails which extend above the conveyor by a sufficient amount to be above the lower portion of the housing when positioned in the operating position to minimise leakage of ultraviolet radiation.

An ultraviolet radiation station may be provided for exposing precut lids of a series of interconnected lids to radiation prior to aligning these lids for sealing to a filled container. Alignment means may be provided either side of an ultraviolet radiation lid housing which contains a plurality of ultraviolet radiation lamps extending traversely of such strips and within 2.5 cm (one inch) of said lamps. The lamps may be of the low intensity type and have an operating temperature less than 65°C., suitable for use with lids having a temperature reactive sealing substrate such as a hot melt, wax or ethylene vinyl acetate.

Preferred embodiments of the invention are shown in the drawings, wherein:

Figure 1 is a schematic of a condiment filling machine having an ultraviolet sterilization station for preformed containers as well as an ultraviolet sterilization system for the lids in accordance with the invention;

Figure 2 is a partial side view of the condiment filling machine giving the detail of the ultraviolet container sterilization station;

Figure 3 is a side view illustrating the mounting arrangement for the housing of the ultraviolet housing of Figure 2;

Figure 4 is a perspective view of the housing of the lid sterilization station;

Figure 5 is an exploded perspective view illustrating the lid sterilization station; and

Figure 6 is a perspective view of the lid sterilization station.

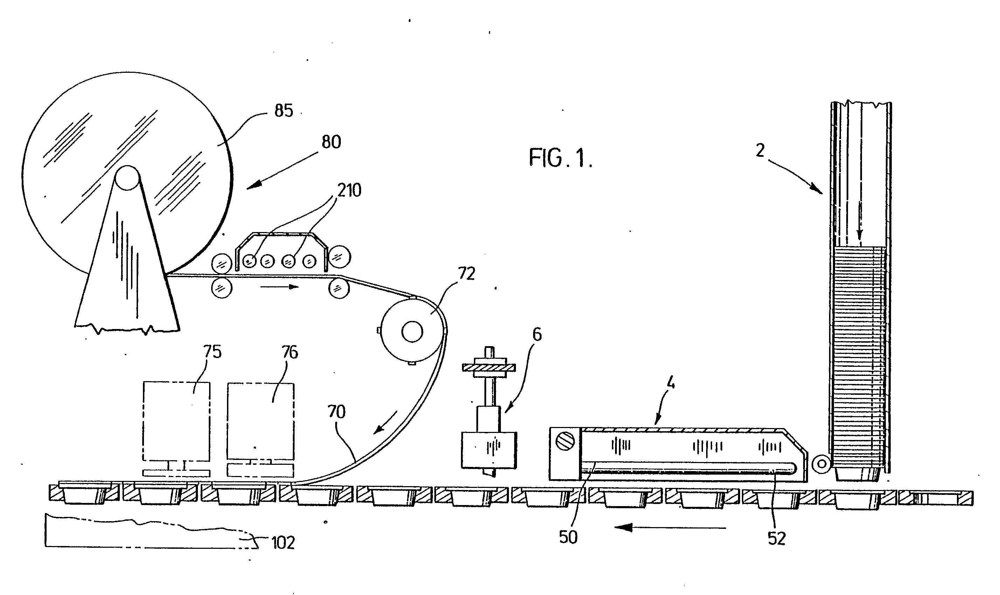

As shown in Figure 1, containers are loaded at position 2 into the filling and packaging machine 100 with the individual containers received within apertures in the conveyor plate such that they are suspended below the side rail 102 of the machine. These containers then pass under the container sterilization station 4 and are exposed to low intensity ultraviolet radiation beneath the housing 50 containing individual ultraviolet lamps. After these containers have been exposed to the ultraviolet radiation they are then filled with product at position 6 and subsequently advanced to the lid positioning and sealing station 8.

As can be seen, the series of interconnected lids 70 are advanced downwardly towards the conveyor and engage with the conveyor plates for positioning of the lids relative to the nested containers. With the movement of the conveyor the series of lids is advanced by the index roller 72 with the lids being sealed to a container by the heat seal member 75 in combination with the clamping member 76 which also cuts the series of interconnected lids and frees the packaging product for individual packaging. The filling station is in timed coordination with the conveyor movement as well as index roller 72 and the heat sealing and clamping member 75 and 76.

Positioned above the heat sealing and clamping members is the ultraviolet lid sterilization station 80 which receives a series of interconnected lids and passes the underside of these lids in close proximity to an ultraviolet radiation source for sterilzing of the lid. The index roller 72 advances the series of interconnected lids through the ultraviolet sterilization system with the lid supply system 85 being free to rotate in response to movement of the index roller. In order to assure alignment of the lids through the ultraviolet sterilization system, two pairs of rollers 315 and 317 are positioned either side of the ultraviolet radiation source to maintain the series of lids essentially immediately below the ultraviolet radiation.

In both cases of container sterilization and lid sterilization the ultraviolet radiation source is of the low intensity type having an operating temperature below approximately 65 degrees centigrade. Because of this the ultraviolet radiation source does not distort the series of interconnected lids or the preformed containers. These materials may be placed in very close proximity to the ultraviolet lamps. This results in concentrated radiation being exposed to the packaging material with reduced dilution due to separation distance. The rate of killing of bacteria and other micro-organisms, due to exposure to ultraviolet radiation, is a function of the total exposure time and the intensity of the radiation being received on the packaging material. In the case of the lids, the exposure of radiation on the packaging material is essentially uniform as the lids are flat and passed immediately below the ultraviolet radiation lamps. However in the case of the preformed containers, the ultraviolet radiation must sterilize the interior portion of the container and this requires a longer exposure time than the lids.

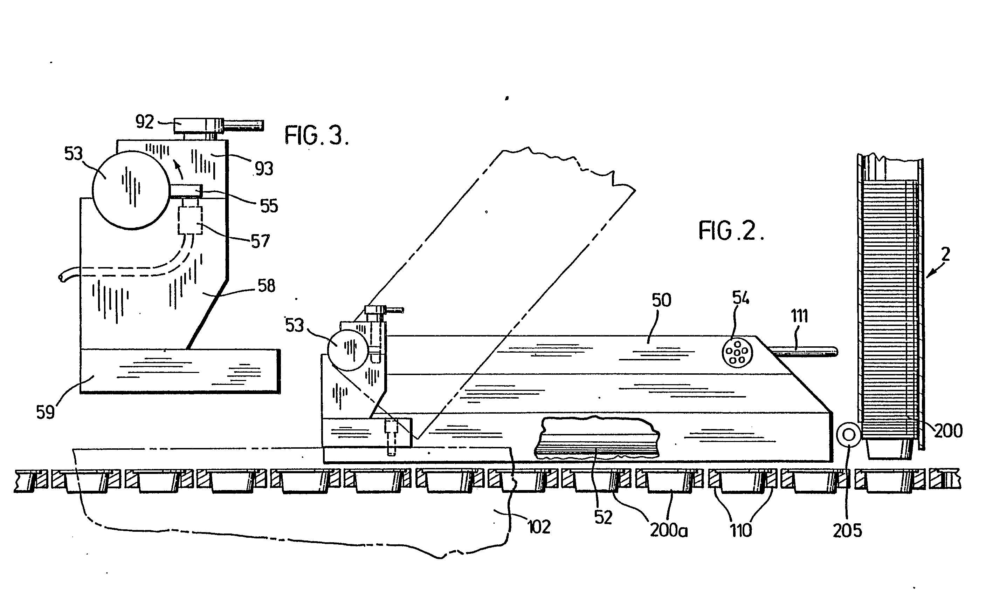

Turning to Figure 2 it can be seen that preformed containers 200 are loaded into individual conveyor plates 110 in accordance with the movement of roller member 205 which is in timed coordination with the movement of the conveyor. The nested containers 200A are then advanced through the ultraviolet container radiation station and beneath the housing member 50. This housing member is supported immediately above the conveyor plates 110 with the ultraviolet lamps 52 positioned within the housing in close proximity to the conveyor plates to provide concentrated radiation within the individual preformed containers. The length of the ultraviolet lamps 52 will vary in accordance with the average conveyor speed to ensure the containers are exposed to the desired amount of ultraviolet radiation. The longer the containers are exposed to this radiation, the greater the extent of bacteria that is killed and this may be varied in accordance with the demands of the particular country in which the containers are being packaged. For example, in European countries a shelf life at room temperature of approximately 2 months may be required for some dairy products and this is possible if the dairy products are aseptic prior to filling in the containers and the containers and lidding materials are aseptic prior to the final packaging operation.

As shown in dotted lines, the housing may be moved upwardly for servicing and pivoted about shaft member 53. This shaft member is hollow and provides a simple method for introducing the required power into the housing member 50 and also introduces air into the housing for cooling. A vent 54 is provided at one end of the housing to allow exhaust of pressurized air. Associated with the shaft is a lever 55 which works in cooperation with a micro-switch shown as 57 in Figure 3. With the movement of the housing upwardly the micro-switch 57 turns off the ultraviolet lamps and reduces the risk of exposing the operator of the device to unnecessary ultraviolet radiation. It may be necessary to gain access to the lower portion of the housing for servicing or merely to clear jammed containers that were not fully received within the conveyor.

Furthermore, as can be seen from Figure 2 the side rails 102 of the condiment filling machine extend above the upper surfaces of the conveyor plates 110 and overlap with the lower edge 51 of the housing. The housing member is sized to be received betweden the side rails 102 of the condiment filling machine and provide this overlapping relationship to reduce the amount of ultraviolet radiation leaked from the edges of the machine. Although we are using low intensity ultraviolet radiation it is still desirable to shield the operator from unnecessary radiation and this provides a particularly simple method for minimizing the amount of radiation leak.

The support block members 58 and 59 for housing 50 engage the pivot shaft 53 in combination with bolt member 92 and block 93. Because of this arrangement the enture housing 50 may be removed from the condiment filling machine by merely releasing bolt member 92 and allowing the shaft 53 to be withdrawn from the blocks 58 and 93. This is desirable when cleaning of the filling machine is necessitated such that all of the conveyor plates are accessible and to reduce the likelihood of high pressure water being introduced into the housing through vent 54. In this manner the ultraviolet sterilization housing may be cleaned separately without requiring disconnection of the power or air source from the housing as these are still maintained relative to housing.

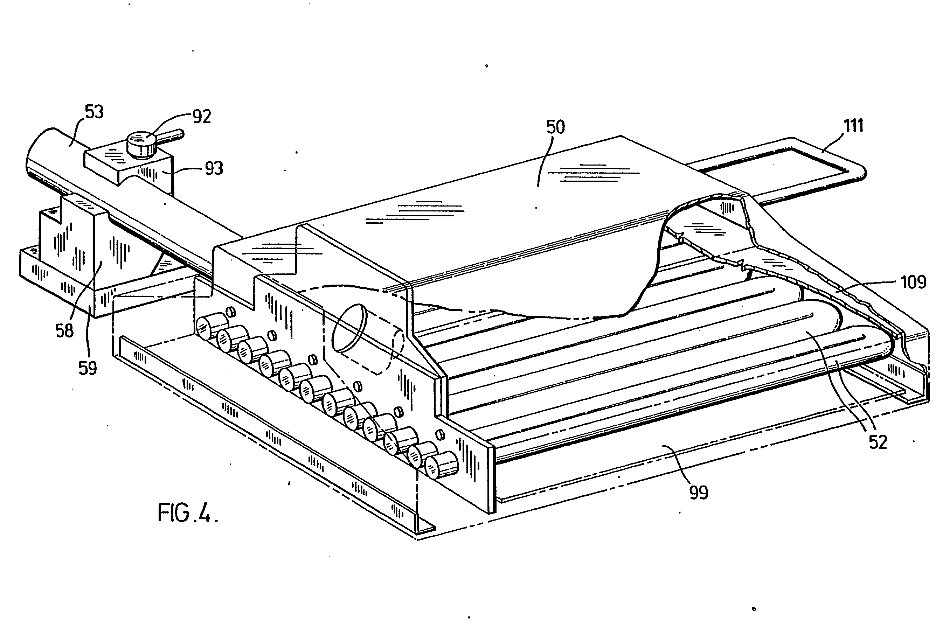

Further details of the housing member are shown in Figure 4 where it can be seen that the housing contains 6 U-shaped ultraviolet radiation lamps which are spaced across the width of the housing each for alignment with one lane of the multi-lane condiment filling machine. In this manner each lane has an ultraviolet radiation lamp directly thereabove to provide concentrated radiation in the containers as they pass beneath the ultraviolet lamps. Although this lamp alignment is preferred, transverse mounting is also possible. As previously mentioned, this is low intensity ultraviolet radiation which, because of its low operating temperature, can be brought into close proximity of the packaging material to be treated to provide a concentrated radiation intensity on the packaging material. If a higher kill rate is required the exposure time may be increased although it has been found that other factors start to determine the shelf life of the product rather than the condition of the container prior to loading of the dairy product. The present apparatus provides an exposure time of approximately 4 seconds suitable for creamer containers having a depth of approximately 3 centimeters.

The amount and the intensity of the radiation exposed on the containers is a function of the depth thereof and this apparatus may not always be suitable for deep drawn containers. It is possible to increase the exposure time beneath the ultraviolet radiation in the case of deep drawn containers; however then the apparatus may become unduly long.

The tubes presently used in this structure are produced by Canrad Hanovia of New Jersey, Catalogue # 688AO450. These tubes have a number of particularly desirable features in that they have a cold cathode allowing immediate start-ups and shut-downs of the tube and are relatively inexpensive compared with water cooled ultraviolet tubes. The tubes are made of VYCOR (trade mark) which filters the ultraviolet radiation having a wavelength of less than $200 \times 10^{-9}$m (2000 Angstroms) and thus the resulting ultraviolet radiation exposed on the containers is substantially free of ozone producing wavelengths which are less than $200 \times 10^{-9}$m (2000 Angstroms). Ozone is not desired in this application as it tends to change the taste of the product when loaded into the containers and also absorbs some of the ultraviolet radiation produced. For this reason it is desirable to filter the ultraviolet radiation to avoid the production of ozone and to restrict any ozone produced to within the housing 50.

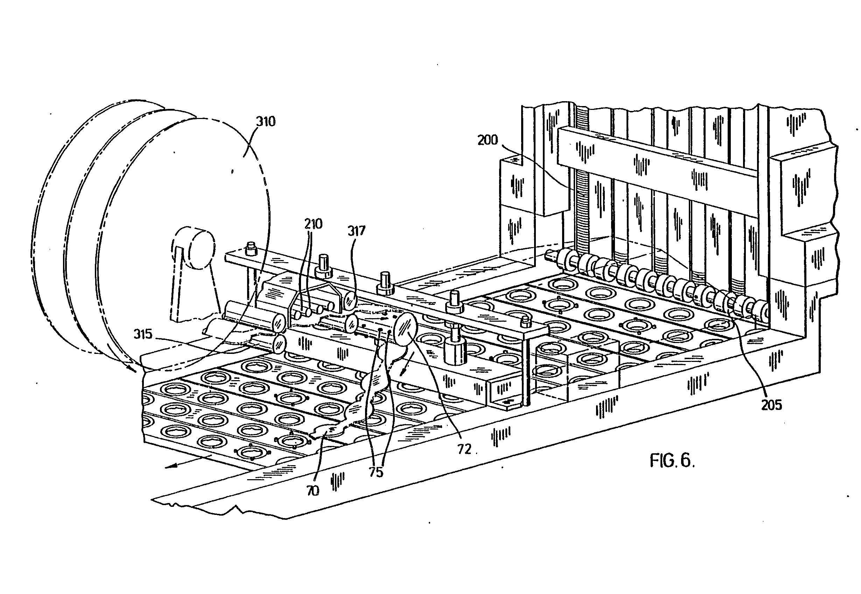

To assist in this matter and to further protect the tubes from direct contact, a piece of Lexan (trade mark) which is essentially transparent to ultraviolet radiation is placed within the bottom of the housing and forms a window through which the radiation is exposed on the container. In this manner the positive air pressure that is introduced through shaft 53 passes within the housing member and is vented out vent 54. The Lexan thus eliminates the possibility of air being directed downwardly onto the containers which could possibly introduce ozone into those containers. This Lexan is shown as 99 in Figure 4. Within the housing member a reflector 109 is positioned above the ultraviolet lamps 52 and has a lower surface which is reflective to ultraviolet radiation. In this mannber more of the radiation produced by the lamps is brought into contact with the packaging material to be sterilized. Furthermore, it can also be seen that a handle member 111 is provided at the far end of the housing to facilitate pivoting of the housing member upwardly for service. The lid sterilization 300 is shown in Figure 6 and again utilizes the lower intensity ultraviolet radiation tubes used in the sterilization of the preformed containers. Six series of interconnected lids have been shown with each series associated with its own drum supply 310. These drums are pivotally supported and freely rotate about their axes such that the series of lids are advanced through the sterilization unit due to the index drum 72. The drum is in timed coordination with the conveyor movement and ensures that the sterilized lids are brought into alignment with the conveyor bed with the portion of the lids between the index drum and the conveyor bed providing a smooth arc to accommodate minor tolerance variations in the series of lids.

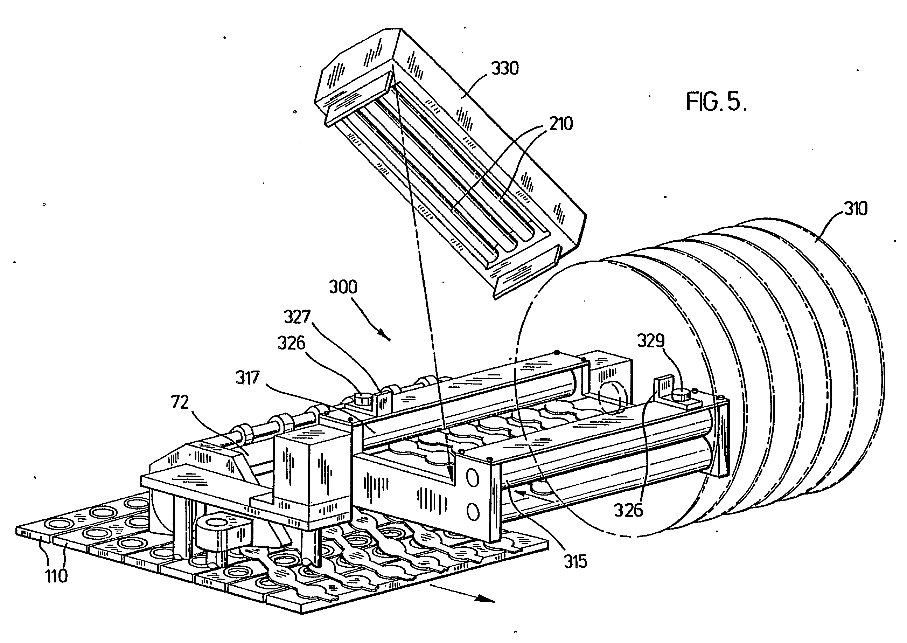

To ensure the lids are generally planar passing through the ultraviolet sterilization unit two pairs of rollers 315 and 317 are provided either side of the lid housing 330 shown in Figures 5 and 6. The movement of the lids through the sterilization unit is in the opposite direction to the conveyor movement such that the lower portion of the lids are exposed to the radiation source with the index drum 72 reversing the lids and allowing this lower surface to come into contact with the containers.

The index drum 72 of Figure 6 has a number of projections 75 for engaging the series of interconnected lids and advancing them through the lid sterilization station. Preferably the drum is located below the alignment rollers to reduce the contact of the lids with the upper roller of the pair 317. In some applications the upper roller would not be required. As with the other components of the machine which contact the food stuff or packaging material they are made of a material which can be cleaned and sterilized easily. Often the machine is partially enclosed and provided with a positive air pressure of filtered air to minimize contamination through the air.

In a manner similar to that of the container sterilization station low intensity ultraviolet radiation tubes 210 are provided and in this case they extend across the series of interconnected lids. The low temperature operating characteristics of these tubes allow the lids to be placed immediately below the housing and within approximately 12.5 mm (half an inch) of the lower surface of these tubes. Temperature is extremely important with the lids as they have a heat sealable substrate, such as hot-melt adhesives, wax or ethylene vinyl acetate, which are flammable. Because the substrate is thermal reactive, the temperature of the lids must be maintained below the activation temperature if the system is to operate effectively. As the lids are precut and of multiple layers, damage can occur at fairly low temperatures. For example, curling of the lids can occur due to heat and make the alignment of the lids with containers very difficult. This is a direct result of the conveyor interacting with the series of lids to align them above containers and this necessitates the lids being somewhat planar. An appreciable amount of curling will render this operation ineffective. The housing 330 is positioned above the lids by moving the housing downwardly as shown in Fig. 5 with the brackets 326 and 327 engaging the upper surface of the housing and positively locking the housing relative to the support structure by tightening of the thumb screws 329. This housing does not require positive air circulation due to the use of only two U-shaped ultraviolet radiation tubes.

The structure described above provides a simple and inexpensive apparatus and method for sterilising preformed packaging materials immediately prior to dairy products being loaded. The packaging materials are exposed to ultraviolet radiation in such a manner as to receive at least one joule of energy produced at a wavelength of $253.7 \times 10^{-9}$m (2537 Angstroms).

In contrast to prior art arrangements, it has been found that low intensity ultraviolet radiation tubes are extremely useful for this application due to the reduced hazard associated with this type of radiation and the lower operating temperatures that can be achieved easily. Furthermore, low intensity ultraviolet radiation tubes can be started and shut down almost immediately thereby being more appropriate for multi-lane condiment filling machines which due to the other functions being completed, may have momentary interruptions. if these interruptions occur the ultraviolet lights can be shut down and the packaging material will not be exposed to undue radiation. This remains a problem with high intensity ultraviolet radiation which have longer start-up times and higher operating temperatures. Therefore these interruptions in high intensity ultraviolet applications cause rapid temperature increases in the packaging material and damage or posisbly a fire with respect to the lidding.

The present method and apparatus can also be used for final sterilization of packaging materials which have been previously sterilized by other techniques. For example, preformed containers are often exposed to ethylene oxide and then packaged for use by the dairy and this ultraviolet system could provide a further sterilization step to eliminate bacteria introduced by the operator handling the packages during loading of the containers. Therefore it can be appreciated that although the invention could be used without presterilized material it could also be used to merely eliminate contamination due to handling of the packaging at the packaging facility.

**Claims**

1. A method for packaging products into preformed containers (200) and sealing each container with a lid (70) comprising loading containers onto a conveyor (110), advancing the containers, filling (6) the containers, heat-sealing (75) a lid to each filled container and unloading the containers from the conveyor wherein the packaging material forming the containers and lids is exposed (4,80), prior to dispensing and sealing of the products, to ultraviolet radiation wherein the packaging material is exposed to the ultraviolet radiation for sufficient time to reduce bacteria on such packaging material to a point that no longer critically affects the shelf life of the packaged product, characterised by generating said ultraviolet radiation (52,210) within approximately 2.5 cm (1 inch) of said packaging material which is substantially free of ultraviolet radiation having a wavelength less than $200 \times 10^{-9}$m.

2. A method according to claim 1, characterised in that said packaging material is exposed so as to receive at least one joule of energy produced at a wavelength of $253.7 \times 10^{-9}$m.

3. A method according to claim 1 or 2, further characterised by the operating temperature of ultraviolet lamps (52,210) used in generating said ultraviolet radiation being below 65°C.

4. A high speed multi-lane condiment or dairy filling machine for packaging aseptic product in packaging material including a conveyor (110) for receiving containers (200) and spacing such containers across the width and along the length thereof, means for advancing such containers, filling means (6) for loading aseptic product into such containers, means (75) for positioning and heat sealing a lid (70) to a filled container, a plurality of ultraviolet radiation lamps (52,210) for exposing said packaging material in the form of containers and lids prior to filling and sealing said packaging material to ultraviolet radiation for sufficient time to reduce bacteria on such packaging material to a point that no longer critically affects shelf life of the packaged product characterised by said plurality of lamps (32,210) being positioned within approximately 2.5 cm (1 inch) of said packaging material, said plurality of lamps emitting ultraviolet radiation which is substantially free of ultraviolet radiation having a wavelength less than $200 \times 10^{-9}$m.

5. A multi-lane filling machine according to claim 4, characterised in that said packaging material is exposed so as to receive at least one joule of energy produced at a wavelength of $253.7 \times 10^{-9}$m.

6. A multi-lane filling machine according to claim 4 or 5 characterised in that said conveyor (110) is supported between two continuous rails (102) which extend above said conveyor a sufficient amount to be above the lower portion of a housing (50) when positioned in the operating position to minimize leakage of ultraviolet radiation.

7. A multi-lane filling machine according to claims 4, 5 or 6, further characterised by the operating temperature of ultraviolet lamps (52,210) used in generating said ultraviolet radiation being below 65°C.

**Patentansprüche**

1. Verfahren zum Abpacken von Produkten in vorgefertigte Behälter (200) und Versiegeln eines jeden Behälters mit einem Deckel (70), wobei die Behälter auf ein Förderband (110) gesetzt werden, die Behälter vorwärtsbewegt werden, die Behälter abgefüllt werden (6), ein Deckel auf jeden gefüllten Behälter durch Heißsiegeln (75) aufgebracht wird und die Behälter von dem Förderband abgenommen werden, wobei weiterhin das Verpackungsmaterial, welches die Behälter und Deckel bildet, vor dem Verpacken und Versiegeln der Produkte ultravioletter Strahlung ausgesetzt wird (4, 80), in der das Verpackungsmaterial einer ausreichend langen Zeit ultravioletter Strahlung ausgesetzt ist, um Bakterien auf dem Verpackungsmaterial bis auf einen Wert zu verringern, der nicht mehr länger in kritischer Weise die Lagerzeit des verpackten Produktes beeinflußt, dadurch gekennzeichnet, daß die ultraviolette Strahlung (52, 210) in einem Abstand von ungefähr 2,5 cm (1 Inch) zu dem Verpackungsmaterial erzeugt wird und im wesentlichen frei von ultravioletter Strahlung mit einer Wellenlänge unter $200 \times 10^{-9}$m ist.

2. Verfahren nach Anspruch 1, dadurch gekennzeichnet, daß das Verpackungsmaterial so bestrahlt wird, daß es wenigstens ein Joule an Energie, die bei einer Wellenlänge von $253,7 \times 10^{-9}$m erzeugt wird, aufnimmt.

3. Verfahren nach Anspruch 1 oder 2, dadurch gekennzeichnet, daß die Arbeitstemperatur der ultravioletten Lampen (52, 210), die zur Erzeugung der ultravioletten Strahlung verwendet werden, unter 65°C liegt.

4. Hochgeschwindigkeits-Mehrbahn-Abfüllmaschine für Gewürze oder Milchprodukte zum keimfreien Verpacken von Produkten in Verpackungsmaterial, mit einem Förderband (110) zur Aufnahme von Behältern (200) derart, daß die Behälter über die Breite und entlang der Länge des Förderbandes im Abstand voneinander angeordnet sind, mit Einrichtungen zum Vorbewegen der Behälter, mit einer Abfüllvorrichtung (6) zum Abfüllen von keimfreiem Produkt in die Behälter, mit Einrichtungen (75) zum Ausrichten und Heißsiegeln eines Deckels (70) auf dem gefüllten Behälter, mit einer Mehrzahl von Ultraviolett strahlenden Lampen (52, 210), um das Verpacku]gsmaterial in Form der Behälter und Deckel vor dem Abfüllen und Versiegeln des verpackten Materials ultravioletter Strahlung ausreichend lang auszusetzen, um Bakterien auf dem Verpakkungsmaterial bis auf einen Wert zu verringern, der die Lagerzeit des verpackten Produktes nicht länger negativ beeinflußt, gekennzeichnet durch eine Mehrzahl von Lampen (32, 210), welche im Abstand von annähernd 2,5 cm (1 Inch) zu dem Verpackungsmaterial angeordnet sind und ultraviolette Strahlung emittieren, die im wesentlichen frei von ultravioletter Strahlung ist, die eine Wellenlänge von unter 200 × 10⁻⁹m hat.

5. Abfüllmaschine nach Anspruch 4, dadurch gekennzeichnet, daß das Verpackungsmaterial so angeordnet ist, daß es wenigstens ein Joule einer Energie aufnimmt, welche bei einer Wellenlänge von 253,7 × 10⁻⁹m erzeugt wird.

6. Abfüllmaschine nach Anspruch 4 oder 5, dadurch gekennzeichnet, daß das Förderband (110) zwischen zwei langestreckten Schienen (102) gelagert ist, welche sich über das Förderband in eine ausreichende Höhe erstrecken, um über dem unteren Bereich eines Gehäuses (50) zu sein, wenn dieses in der Arbeitsstellung ist, um ein Austreten von ultravioletter Strahlung zu minimieren.

7. Abfüllmaschine nach Anspruch 4, 5 oder 6, dadurch gekennzeichnet, daß die Arbeitstemperatur der ultravioletten Lampen (52, 210), die zur Erzeugung der ultravioletten Strahlung verwendet werden, unter 65°C liegt.

**Revendications**

1. Procédé pour emballer des produits dans des ·conteneurs pré-formés (200) et fermer chaque conteneur avec un couvercle (70) comprenant le chargement de conteneurs sur un transporteur (110), l'avancement des conteneurs, le remplissage (6) des conteneurs, le soudage à chaud (75) d'un couvercle sur chaque conteneur rempli et le déchargement des conteneurs du transporteur, dans lequel le matériau d'emballage formant les conteneurs et les couvercles est exposé (4, 80), avant la distribution et la fermeture des produits, à un rayonnement ultraviolet dans lequel le matériau d'emballage est exposé au rayonnement ultraviolet pendant un temps suffisant pour réduire les bactéries sur ledit matériau d'emballage jusqu'à un point auquel elles n'affectent plus de façon critique la durée de conservation du produit emballé, caractérisé en ce qu'on engendre ledit rayonnement ultraviolet (52, 210) à une distance inférieure à 2,5 cm (un pouce) dudit matériau d'emballage, rayonnement qui est à peu près dépourvu de rayonnements ultraviolets ayant une longueur d'onde inférieure à 200 × 10⁻⁹m.

2. Procédé suivant la revendication 1, caractérisé en ce que ledit matériau d'emballage est exposé de façon à recevoir une énergie d'au moins un joule produite avec une longueur d'onde de 253,7 × 10⁻⁹m.

3. Procédé suivant l'une ou l'autre des revendications 1 ou 2, caractérisé en outre en ce que la température de fonctionnement des lampes à ultraviolets (52, 210) utilisées pour engendrer ledit rayonnement ultraviolet est inférieure à 65°C.

4. Machine de remplissage de condiment ou de produit laitier à haute vitesse et à plusieurs voies pour emballer un produit aseptique dans un matériau d'emballage, comprenant un transporteur (110) pour recevoir des conteneurs (200) et espacer ces conteneurs sur la largeur et la longueur de celui-ci, des moyens pour faire avancer les conteneurs, un un dispositif de remplissage (6) pour charger le produit aseptique dans ces conteneurs, des moyens (75) pour positionner et souder à chaud un couvercle (70) sur le conteneur rempli, une pluralité de lampes à rayonnement ultraviolet (52, 210) pour exposer ledit matériau d'emballage constitué par des conteneurs et des couvercles avant le remplissage et fermer ledit matériau d'emballage, à un rayonnement ultraviolet pendant un temps suffisant pour réduire les bactéries sur ces matériaux d'emballage jusqu'à un point où elles n'affectent plus de façon critique la durée de conservation du produit emballé, caractérisé en ce que ladite pluralité de lampes (32, 210) est disposée à und distance inférieure à 2,5 cm (un pouce) dudit matériau d'emballage, ladite pluralité de lampes émettant un rayonnement ultraviolet qui est à peu près dépourvu de rayonnement ultraviolet ayant une longueur d'onde inférieure à 200 × 10⁻⁹m.

5. Machine de remplissage à plusieurs voies suivant la revendication 4, caractérisé en ce que ledit matériau d'emballage est exposé de façon à recevoir une énergie d'au moins un joule produite avec une longueur d'onde de 253,7 × 10⁻⁹m.

6. Machine de remplissage à plusieurs voies suivant la revendication 4 ou 5, caractérisée en ce que ledit transporteur (110) est soutenu entre deux rails continus (102) qui s'étendent au-dessus dudit transporteur d'une quantité suffisante pour être au-dessus de la partie inférieure d'un carter (50) lorsqu'il est placé dans la position de fonctionnement afin de réduire la perte de rayonnement ultraviolet.

7. Machine de remplissage à plusieurs voies suivant les revendications 4, 5 ou 6, caractérisé en outre en ce que la température de fonctionnement des lampes à ultraviolets (52, 210) utilisées pour engendrer ledit rayonnement ultraviolet est inférieure à 65°C.

FIG.1.

0 065 380

FIG. 3.

FIG. 2.

0 065 380

FIG.4.

0 065 380

FIG.5.

0 065 380

FIG.6.

0 065 380